# EUROPEAN PATENT APPLICATION

(11) **EP 3 190 782 A2**
(43) Date of publication of application: **12.07.2017**
(21) Application number: 16157642.6
(22) Date of filing: 26.02.2016
(51) Int. Cl.: H04N 5/232

(54) **ACTION CAMERA**

(30) Priority: 31.12.2015 US 201514986368
(71) Applicant: Activeon Holdings, Inc., Las Vegas NV 89128 (US)
(72) Inventor: Lee, Chong Woen, San Diego, CA 92127 (US); Kim, Jae Wan, San Diego, CA 92128 (US); Yoon, Young Soo, Poway, CA 92064 (US); Li Yuanming, Yuanming, Shenzhen (CN)
(74) Representative: Dr. Weitzel & Partner

(57) **Abstract**

A camera configured to record video and comprising a frame, a lens, an image sensor receiving light passing through the lens, a user interface including a display screen positioned opposite the lens, touch control elements, and navigation logic structured to turn on the camera responsive to touching in a first pattern at least one of the touch control elements, switch to another operating mode from a present operating mode responsive to clicking, at least once, the second touch control element, and enter a program mode responsive to touching the touch control elements according to a second pattern different than the first pattern and different from a single click of the second touch control element.

## Description

### TECHNICAL FIELD

This disclosure relates to cameras to record video and photos, and more particularly to action cameras.

### BACKGROUND OF THE DISCLOSURE

The following discussion of the background of the disclosure is intended to facilitate an understanding of the invention. However, it should be appreciated that the discussion is not an acknowledgment or admission that any of the material referred to was published, known or part of the common general knowledge as of the priority date of any of the claims.

Action cameras are designed for filming while performing activities. Because they can be carried by the person performing the activity, it is desirable that the camera be small, unobtrusive, and easy to use. Action cameras generally include protective housings. Mounting adapters are generally used to attach the protective housing to a helmet, skate board, harness, or other equipment worn by the user while performing the activity. Activities associated with the use of action cameras include, among others, extreme sports, such as base jumping and wingsuit flying, bicycle and motorcycle riding, snorkeling, and scuba diving.

The protective housing protects the action camera from the elements but also limits access to its controls. If no controls are provided in the protective housing, then video recording must be activated before the camera is placed in the housing, which wastes memory space and battery, or controlled remotely, which requires the user to also carry a remote control device such as a smart phone or computing tablet. Controls provided in or on the protective housing typically comprise sealed push-buttons. When a protective housing push-button is depressed, it contacts a push-button on the action camera. This gives the user control of the action camera after it has been placed in the protective housing. However because the protective housing push-buttons are sealed, the probability of leakage by a seal increases proportionally with number of controls. Furthermore, push-buttons actionable in a direction parallel to the mounting adapter can cause the action camera to move from the position that captures the desired scene.

Additionally, it is desirable to transfer content from the action camera. The content may include video and photos, which may be transferred to another device wirelessly or via a cable connecting the action camera and the device. Ultimately, the user may desire to make the content available on the internet, for example in social media, which requires an additional transmission from the device and introduces delays between when the content is captured by the camera and when it becomes available on the internet.

There is a need for an action camera that can be easily manipulated and controlled, even while enclosed, and which also overcomes the foregoing limitations, and others, of prior action cameras.

### SUMMARY OF THE DISCLOSURE

A camera configured to record video, and a method of programming the camera, are provided herein. In one embodiment, the method comprises supporting the camera, the camera comprising a lens and a user interface including a display screen positioned opposite the lens and touch control elements consisting of a first touch control element and a second touch control element, and navigation logic structured to program the camera with the touch control elements; touching in a first pattern at least one of the touch control elements to turn on the camera; clicking, at least once, the second touch control element to enter an operating mode selected from a plurality of operating modes; and touching the touch control elements according to a second pattern different than the first pattern and different from a single click of the second touch control element, to enter a program mode, wherein clicking comprises touching for less than a first predetermined time and holding comprises touching for at least a second predetermined time, the second predetermined time being longer than the first predetermined time.

In a variation of the present method, touching according to a first pattern comprises holding the first touch control element.

In another variation of the present method, touching according to a second pattern comprises holding the second touch control element.

In a further variation of the present method, clicking, at least once, the second touch control element to enter an operating mode selected from a plurality of operating modes comprises clicking the second touch control element until a desired mode icon is presented on the display screen, wherein the operating mode is associated with the desired mode icon. In one example, clicking, at least once, the second touch control element to enter an operating mode selected from a plurality of operating modes further comprises clicking the first touch control element.

In yet another variation, the method comprises enclosing the camera in a protective housing comprising a first push-button and a second push-button, wherein touching comprises pressing, by the user, at least one of the first push-button and the second push-button to contact a corresponding one of the first touch control element and the second touch control element.

In another variation, the method further comprises, in the program mode, clicking the second touch control element until a desired effect icon is visually distinguished from other effect icons on the display screen; and clicking the first touch control element to program the camera with an effect associated with the desired effect icon.

In another variation, the method further comprises, in the program mode, clicking the second touch control element until a desired program icon is visually distinguished from other program icons on the display screen; clicking the first touch control element to select a program mode associated with the desired program icon; clicking the second touch control element until a desired effect icon is visually distinguished from other effect icons on the display screen, the effect icons corresponding to the selected program mode; and clicking the first touch control element to select an effect associated with the desired effect icon.

The method may comprise touching the first touch control element to capture one of an image and a video.

According to one embodiment, the camera comprises a housing and further a protective housing enclosing the housing of the camera. This means the protective housing has an interior space for housing the camera with its housing to protect the camera housing from environmental impacts.

The method may comprise the step of enclosing the camera in a protective housing comprising a first push-button and a second push-button, wherein touching comprises pressing, by the user, at least one of the first push-button and the second push-button to contact a corresponding one of the first touch control element and the second touch control element until one of a touch and a hold is determined by the navigation logic.

The method may comprise the step of touching the first control element to record a digital image.

A camera configured to record video is also provided herein. In some embodiments, the camera is configured to implement a method comprising supporting the camera, the camera comprising a lens and a user interface including a display screen positioned opposite the lens and touch control elements consisting of a first touch control element and a second touch control element, and navigation logic structured to program the camera with the touch control elements; touching in a first pattern at least one of the touch control elements to turn on the camera; clicking, at least once, the second touch control element to enter an operating mode selected from a plurality of operating modes; and touching the touch control elements according to a second pattern different than the first pattern and different from a single click of the second touch control element, to enter a program mode, wherein clicking comprises touching for less than a first predetermined time and holding comprises touching for at least a second predetermined time, the second predetermined time being longer than the first predetermined time.

In another embodiment the camera comprises a frame; a lens supported by the frame; an image sensor receiving light passing through the lens; a user interface including a display screen positioned opposite the lens, touch control elements consisting of a first touch control element and a second touch control element, and navigation logic structured to: turn on the camera responsive to touching in a first pattern at least one of the touch control elements, switch to another operating mode from a present operating mode responsive to clicking, at least once, the second touch control element, and enter a program mode responsive to touching the touch control elements according to a second pattern different than the first pattern and different from a single click of the second touch control element, wherein clicking comprises touching for less than a first predetermined time and holding comprises touching for at least a second predetermined time, the second predetermined time being longer than the first predetermined time.

In a variation of the present embodiment, clicking, at least once, the second touch control element to enter an operating mode selected from a plurality of operating modes comprises clicking the second touch control element until a desired mode icon is presented on the display screen, wherein the operating mode is associated with the desired mode icon. In one example, clicking, at least once, the second touch control element to enter an operating mode selected from a plurality of operating modes further comprises clicking the first touch control element.

In another variation of the present embodiment, clicking, at least once, the second touch control element comprises clicking the second touch control element once to cause the display screen to present a first mode icon, clicking the second touch control element at least a second time to present a mode icon corresponding to a desired mode, and clicking the first touch control element to enter the desired mode.

In another embodiment, the camera comprises a frame; a lens supported by the frame; an image sensor receiving light passing through the lens; a user interface consisting of a display screen positioned opposite the lens, a first touch control element, a second touch control element, and navigation logic structured to: turn on the camera responsive to holding the first touch control element, switch to another operating mode from a present operating mode responsive to clicking, at least once, the second touch control element, enter a program mode responsive to holding the second touch control element, and store a digital image responsive to touching the second touch control element, wherein clicking comprises touching for less than a first predetermined time and holding comprises touching for at least a second predetermined time, the second predetermined time being longer than the first predetermined time.

In some embodiments of the camera, the present operating mode and the desired operating mode are selected from a group including a photo mode and a video mode.

In some embodiments of the camera, the first touch control element comprises one of a capacitive sensor and a push-button.

In some embodiments of the camera, the first touch control element and the second touch control element are disposed between the lens and the display screen.

In some embodiments of the camera, the display screen comprises a touch sensor that is substantially coextensive with a display area of the display screen. A display screen that includes a touch sensor is referred to herein as a "touch screen". In one variation, the navigation logic comprises instructions configured to present navigation tabs on the display screen, the navigation tabs operable to enter the desired operating mode and the program mode responsive to touch of the touch sensor.

In some embodiments of the camera, the camera further comprises a flat package including a metal comprising an antenna pattern and a contact node, the antenna pattern configured to transmit radio-frequency signals provided at the contact node, the flat package affixed to and inside the frame parallel and adjacent to a top side of the frame. In one variation, a plane passing through the center of the camera perpendicularly to the display screen divides the camera into two halves, wherein the lens and the flat package are located in one of the two halves and the first touch control element is located in or on the other of the two halves. In one example, the navigation logic is located substantially entirely in the other of the two halves.

In some embodiments, a camera is provided comprising: a frame; a lens supported by the frame; an image sensor receiving light passing through the lens; a user interface comprising a display screen positioned opposite the lens and touch control elements consisting of a first touch control element positioned on a side of the camera and a second touch control element positioned on said side of the camera; a processor; and navigation logic to: activate the display screen responsive to touch of the touch control elements according to a first pattern, enter an operating mode selected from a plurality of operating modes responsive to a click of the second touch control element, and enter a program mode responsive to touch of the touch control elements according to a second pattern different than the first pattern and different from a click of the second touch control element.

The camera may be configured to establish wirelessly communication with a website without a smart device and to transfer the content to the website. The website may comprise a social media website.

In some embodiments, a camera is provided comprising a touch control element, an image sensor structured to capture video, a wireless transceiver adapted to communicate with a website, and control logic configured to detect a click of the touch control element by a user and to cause the wireless transceiver to stream the video to the website. In one example, the control logic comprises navigation logic to detect the click and content management logic to stream the video. In one example, to stream the video comprises automatically transmitting the video in substantially real-time. In one example, the control logic is programmable by the user to set the camera in a quick streaming mode, wherein in the quick streaming mode the click causes the wireless transceiver to automatically stream the video to the website, and wherein when the quick streaming mode is turned off, the click does not cause the wireless transceiver to automatically stream the video to the website. In one example, the website comprises a social media website. In one example, the wireless transceiver is configured to operate in a cellular telecommunications network. In another example, the wireless transceiver is configured to connect with a wireless access point.

### BRIEF DESCRIPTION OF THE DRAWINGS

The above-mentioned and other disclosed features, the manner of attaining them, and advantages of the invention will become more apparent and will be better understood by reference to the following detailed description of disclosed embodiments of the invention when viewed in conjunction with the accompanying drawings, wherein:
FIG. 1 presents front and back perspective views of an action camera;
FIG. 2 is an exploded perspective view of an action camera system including the action camera of FIG. 1 and a protective housing;
FIG. 3 is a flowchart of an embodiment of a method of using the action camera of FIG. 1;
FIG. 4 presents a sequence of views of a display screen illustrating the embodiment of the method described with reference to FIG. 3;
FIG. 5 is a block diagram of a menu sequence implemented in accordance with the embodiment of the method described with reference to FIG. 3;
FIGS. 6 to 11 are screenshots of the display screen illustrating additional features of the embodiment of the method described with reference to FIG. 3 and navigation using a touch screen;
FIG. 12 is a flowchart of another embodiment of the method of using an action camera;
FIGS. 13 and 14 are screenshots of a display screen of an action camera illustrating features of the embodiment of the method described with reference to FIG. 12;
FIG. 15 is a block diagram of an example action camera architecture;
FIGS. 16 to 18 are partial perspective views and a schematic diagram illustrating a package including an antenna and the package assembled on the frame of an action camera in accordance with a further embodiment thereof; and
FIG. 19 is a flowchart of an embodiment of a method to automatically transfer content to cloud storage.

### DETAILED DESCRIPTION OF DISCLOSED EMBODIMENTS

The embodiments described below are not intended to limit the invention to the precise forms disclosed. Instead, the embodiments were selected for description to enable one of ordinary skill in the art to practice the invention.

Where the terms "comprising" or "including" or "having", or any analogues thereof are used in the specification (including the claims), they are to be interpreted as specifying the presence of the stated features, integers, steps or components, but not precluding the presence of one or more other features, integers, steps or components, or group thereto.

Where the terms "right" or "left", or any analogues thereof, are used in the specification (including the claims), they are to be interpreted as specifying, respectively, the right and left sides of a respective object from the perspective of a person viewing the object. Thus, the right side of the person corresponds to the right side of the object, and the left side of the person corresponds to the left side of the object. It should be understood, therefore, that the terms "right" and "left" are relative to the orientation of the object. If the person is viewing the front side of the object, the right side of the object would be opposite the right side of the object relative to the person viewing the back side of the object. In an analogous manner, if the person "swipes" a touch screen located on the back side of the camera (as discussed further below) from left to right, the swiping movement corresponds to movement from the left side of the person to the right side of the person.

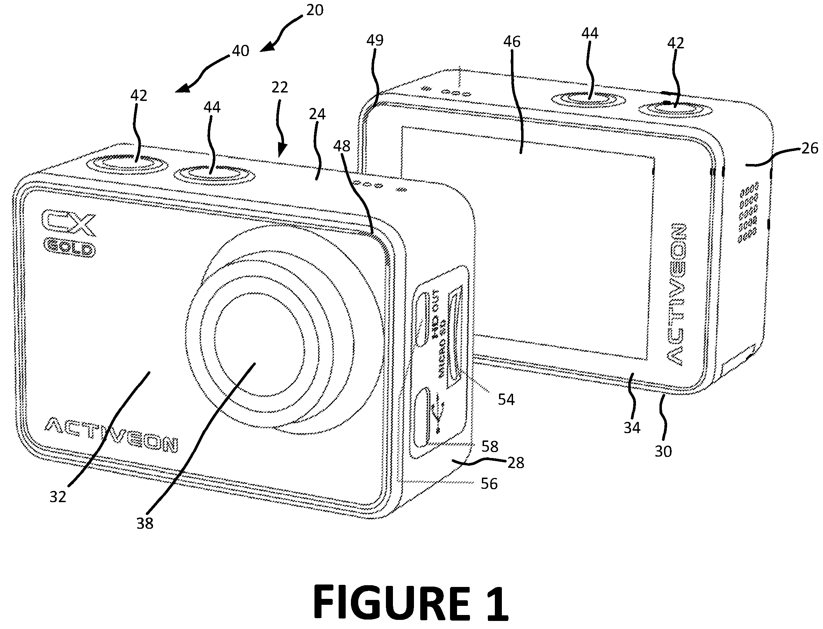

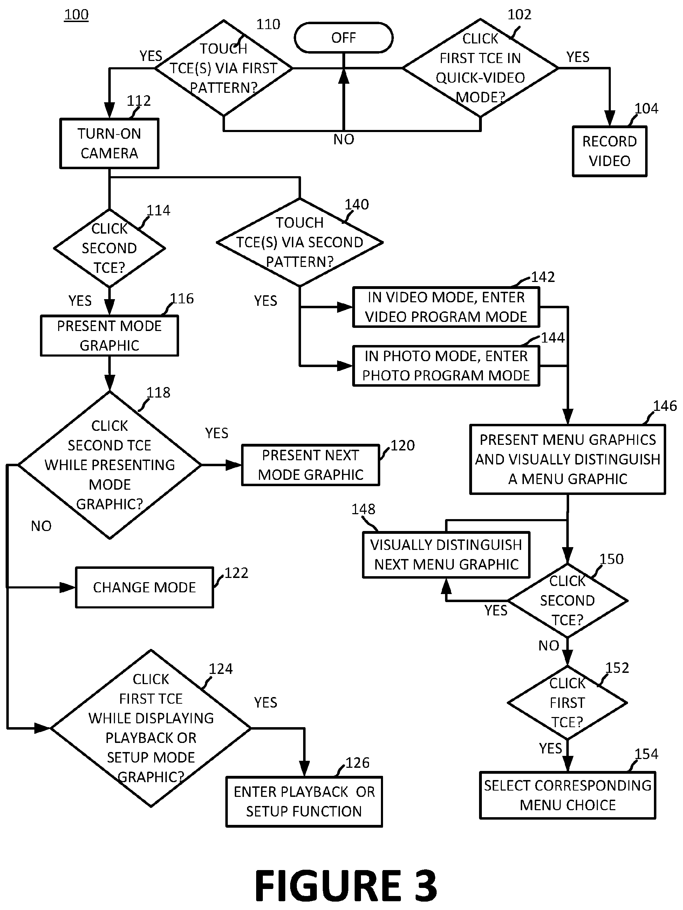

FIG. 1 shows front and back side perspective views of a camera 20. Camera 20 comprises a frame 22 including a top wall 24, lateral walls 26, 28, and a bottom wall 30. Camera 20 further comprises a front side 32, and a back side 34. A lens 38 extends distally from front side 32. Camera 20 further comprises a user interface 40 including a first touch control element (TCE) 42, a second TCE 44, and a display screen 46. First and second touch control elements 42 and 44 are positioned on or in top wall 24 of camera 20. Camera 20 may include additional elements such as indicator lights 48 and 49, a memory socket 54 configured to receive a memory card, an output connector 56 configured to receive a data connector which may be connected to a computer to transfer video and photos from camera 20 to the computer, and a universal serial bus (USB) port 58 configured to charge internal batteries of camera 20. As described further below with reference to FIG. 3, user interface 40 is operable by a user of camera 20 to program camera 20 in a plurality of modes, program settings, and functions, to record photos and videos in various situations and ambient conditions.

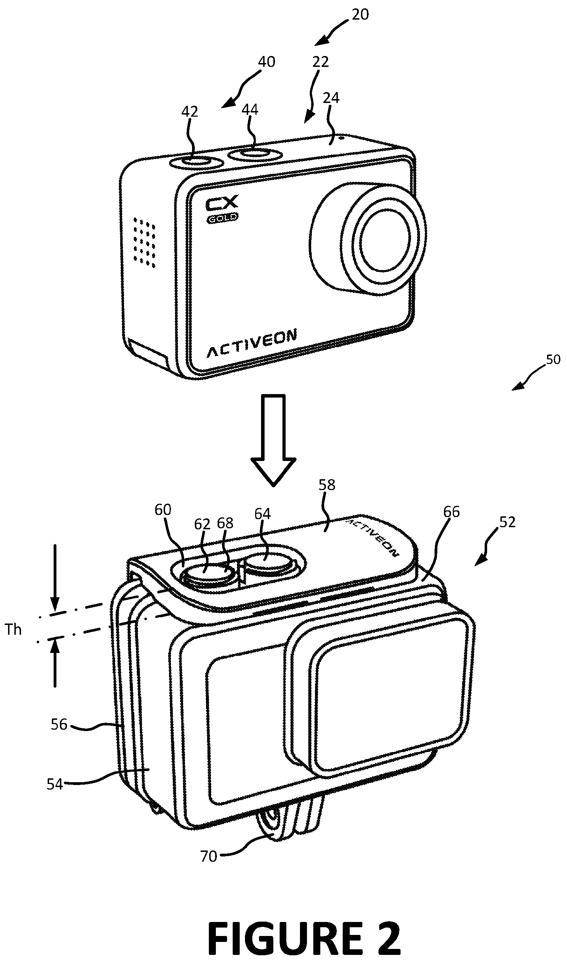

FIG. 2 illustrates an action camera system 50 comprising camera 20 and a protective housing 52. Protective housing 52 includes a body 54 and a back door 56 configured to sealingly couple body 54 in a closed position and, together with body 54, enclose camera 20 in a cavity formed with body 54. A latch mechanism including a latch door 58 causes body 54 and back door 56 to form a seal that keeps moisture out of the cavity and camera 20. Latch door 58 includes a cut-out 60 at least partially surrounding first and second push-buttons 62 and 64. First push-button 62 is axially aligned with first TCE 42 such that pressing first push-button 62 causes a distal end of first push-button 62 to simulate a human touch of first TCE 42. Similarly, second push-button 64 is axially aligned with second TCE 44 such that pressing second push-button 64 causes a distal end of second push-button 64 to simulate a human touch of TCE 44. As used herein, "touch" comprises any contact, whether it be human skin, a gloved finger, or actuation of first or second push-buttons 62, 64, of a TCE, said contact sufficient for navigation logic (described below) to detect and identify the contact as a click or a hold. First and second push-buttons 62 and 64 protrude from body 54, and cut-out 60 has a thickness configured to prevent or limit the probability of unintentional depression of first and second push-buttons 62 and 64. In one example, the thickness, *Th,* is between about 70% and 130% of a distance between the top surface 66 of body 54 and the top surface 68 of first push-button 62, top surface of body 54 and top surface 68 of first push-button 62 defining a protruding distance by which push-button 62 protrudes from top surface 66 of body 54. Protective housing 52 also includes a mounting member 70 configured to secure camera 20 to a support member. Examples of support members comprise transportation devices and equipment worn by the user of camera 20. As used herein, transportation devices include vehicles, surfboards, skateboards, wheeled toys and vehicles, and any device configured to facilitate transportation of a user in land, air, and water. First and second TCEs 42 and 44 are positioned with their longitudinal axis traversing the wall of protective housing 52 from which mounting member 70 extends, e.g. the bottom wall.

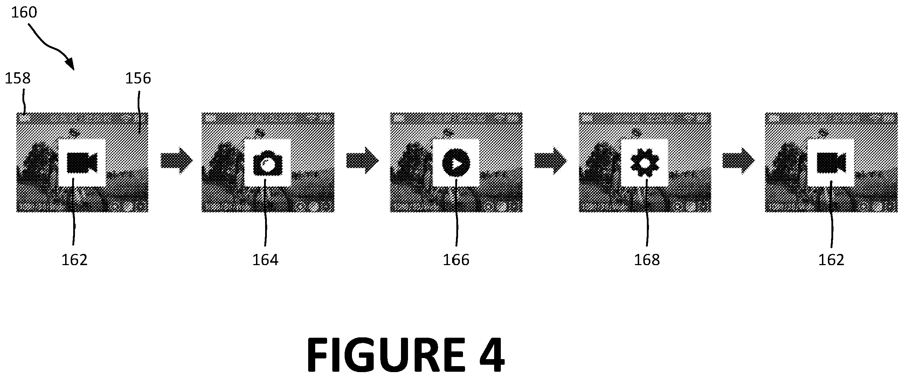

FIG. 3 is a flow chart 100 of an embodiment of a method of configuring camera 20 with user interface 40. Initially, camera 20 is turned off. During prior usage, camera 20 may have been configured in a quick record mode. In such case, at 102, upon clicking first TCE 42, camera 20 turns on and begins to, at 104, record video. Upon clicking first TCE 42 a second time, video recording ends and camera 20 turns off. Alternatively, upon touching the touch control elements in a first pattern, at 110, camera 20 turns on, at 112. Once camera 20 is turned on, a user may click second TCE 44, at 114, and upon said clicking, camera 20 will present a mode icon on the main display area of display screen 46, at 116. The user can then select an operating mode of camera 20. Operating modes include video, photo, playback, and set up. At 118, if the user clicks second TCE 44 while camera 20 presents the mode icon in the main display area of display screen 46, camera 20 will transition the mode icon to the next mode icon, at 120, as further described with reference to FIG. 4. In this manner, the user can cycle through each of the mode icons by repeatedly clicking second TCE 44 while a mode icon is presented on the main display area of display screen 46. If, at 118, a video or photo mode icon is presented, and the user does not click second TCE 44 within a predetermined time, then camera 20 will cease presenting the mode icon and, at 122, camera 20 will enter the mode corresponding to the previously presented mode icon. Thus, for example, if a photo mode icon is displayed, and the user does not touch second TCE 44, after the predetermined time camera 20 will enter the photo mode. In one variation, if the mode icon corresponds to playback or setup modes, camera 20 will not enter the corresponding mode upon the passage of time. Instead, at 124, the user must click first TCE 42 to select the playback or setup mode. Upon clicking first TCE 42, camera 20 will enter the corresponding mode of operation, at 126.

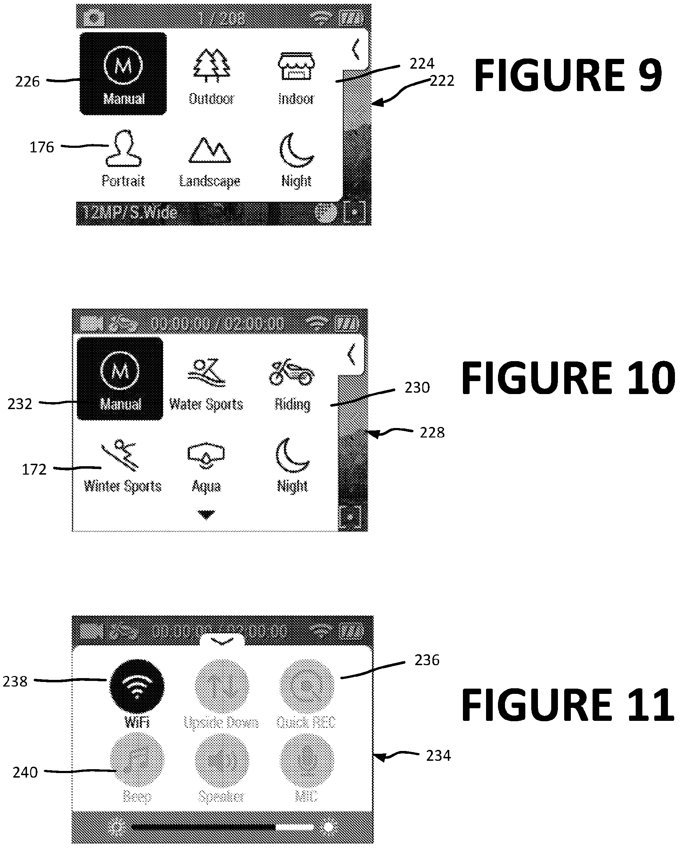

As described below with reference to FIG. 11, the user may access a quick menu to quickly program frequently changed features. The quick menu may include icons corresponding to functions including wireless connection (WiFi), quick record mode, beep, upside down, speaker volume, microphone volume and brightness. WiFi can be toggled on/off to save battery when connectivity is not desired. Quick record may be toggled to prevent inadvertent start of recording, which again wastes battery and ties-up memory space. Beep may be toggled to prevent feedback from the camera, which may be desirable in quiet environments such as theater. Upside down may be toggled to flip video images, which may be desirable depending on where the camera case is mounted. If the camera is mounted upside down, toggling the upside down function generates a correct video orientation (correct side up). Speaker volume, microphone volume, and brightness adjustments are self-explanatory.

As mentioned above, camera 20 may be programmed via the quick menu in a quick record mode. Additionally, camera 20 may be programmed in a quick streaming mode to stream video directly to cloud storage, including social media. Accordingly, in one example, camera 20 begins streaming video upon clicking first TCE 42. In one embodiment, the quick menu includes a quick streaming icon that sets the quick streaming mode. In another embodiment, the quick streaming mode is programmed via the setup or settings menu. The quick streaming mode can be advantageously used to provide safety and security capability, to record interactions with individuals, for example, and to ensure that the individuals cannot completely erase the recorded interaction since a copy of it resides in cloud storage. Activation of the quick streaming mode automatically activates WiFi and establishes communications if a wireless access point is accessible. Camera 20 may also be provided with a cellular communications modem and content management logic, e.g. a dedicated App (described below), to stream content to cloud storage via the cellular communications network.

As used herein, the terms "touch", "touching", and variants thereof, refer to causing contact with at least one of the touch control elements sufficient for the navigation logic to determine that contact was intentional. The determination of sufficient contact is made by the navigation logic based on criteria known in the art for distinguishing accidental contacts and electrical noise from intentional contact. Such criteria may comprise averaging signals from the touch control elements for a predetermined time, for example, and ignoring analog signals below a predetermined amplitude, e.g. a voltage below a threshold voltage. Filtering and averaging may be different if capacitive sensors are used instead of mechanical push-buttons. Causing contact includes direct contact by a user (with or without gloves) with the touch control elements and also indirect contact by the user via push-buttons in or on the protective housing. The navigation logic may comprise hardware configured to de-bounce mechanical switches (e.g. hardware filtering) and to determine when the predetermined time has passed. For example, a known resistor/capacitor circuit (e.g. RC circuit) may be implemented which charges the capacitor while a touch control element is touched. An intentional contact is then determined when the capacitor's voltage exceeds a voltage threshold. Analogously, a signal from the touch control element may be provided to navigation logic and the navigation logic may implement a timer or counter configured to indicate when the predetermined time has passed.

As used herein, the terms "click", "clicking", and variants thereof, refer to touching at least one of the touch control elements for a first predetermined amount of time, and the terms "hold", "holding", and variants thereof, refer to touching at least one of the touch control elements for a second period of time longer than the first predetermined time required to click. For example, the first predetermined time may be less than 0.5 seconds (for a click), and the second predetermined time may be longer than 1 second (for a hold). The predetermined time for a click is sufficiently long to ensure that the touch was not accidental. On the other hand, the predetermined time for a click must be sufficiently short to be distinguishable, by the user, from a hold. In another example, a hold requires the passage of more than 1.5 seconds. In a further example, a hold is determined after the passage of about 2 seconds.

Returning to 112, the user may touch the touch control elements utilizing a second pattern different than the first pattern, at 140. The second pattern is also different than a single click of one or the other TCE. In one example, the second pattern comprises holding second TCE 44. Upon detection of the second pattern, if camera 20 is in the video mode, at 142, camera 20 enters a video program mode. On the other hand, if in the photo mode, at 144, camera 20 enters the photo program mode. Upon entering the video or photo program modes, camera 20 presents menu icons, at 146, and visually distinguishes one of the menu icons. For example, camera 20 may highlight or lowlight one of the menu icons. Camera 20 may also underline or flash to visually distinguish a menu icon. The user may then execute an action based on the visually distinguished icon, or sequentially cycle the menu icons until the desired menu icon is visually distinguished. To sequentially cycle the menu icons, at 150, the user clicks second TCE 44 sequentially until the desired menu icon is visually distinguished, at 148. Once the desired menu icon is visually distinguished, at 152 the user clicks first TCE 42 to select the function corresponding to the visually distinguished menu icon, at 154. The two TCE sequence described in this paragraph to present a plurality of menu choices and select one of them may be referred to as the "menu navigation logic". The method described with reference to FIG. 3 may be implemented in navigation logic, including the menu navigation logic.

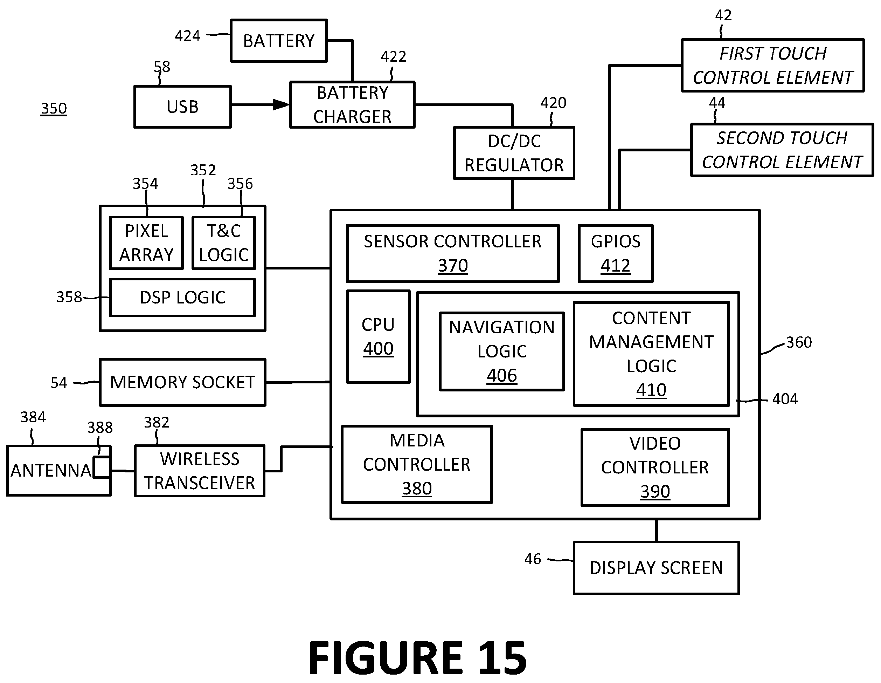

The term "logic" as used herein includes software and/or firmware executing on one or more programmable processors, application-specific integrated circuit (ASIC), field-programmable gate array (FPGA), digital signal processor (DSP), hardwired logic, or combinations thereof. Therefore, various logic may be implemented in any appropriate fashion and would remain in accordance with the embodiments herein disclosed. As described below with reference to FIG. 15, in one example navigation logic is embedded in a non-volatile computer readable storage medium as firmware and is implemented when executed by a processor. In another example, navigation logic is comprised in an ASIC. In a further example, navigation logic is implemented in an FPGA. The ASIC, FPGA and firmware may additionally comprise image processing logic and other logic needed to scale the images for presentation on the display screen.

In addition to navigation and the on/off function, first TCE 44 is also programmed with the shutter function. In the photo mode, clicking first TCE 44 causes camera 20 to capture a photo. In the video mode, clicking first TCE 44 causes camera 20 to begin capturing video. Thus, contrary to film cameras, the shutter function causes camera 20 to, via a pixel array, convert light impacting the pixel array into pixel voltages, which are then converted to digital data representing the amount of light impacting each pixel of the array. The "shutter speed" represents an amount of time the pixel array is permitted to be impacted by light rather than the speed at which a physical shutter opens and closes to permit access to a photosensitive film. It should be understood that while first and second TCEs 42, 44 are shown in FIGS. 1 and 2 in one orientation relative to each other, with second TCE 44 positioned between first TCE 42 and lens 38, first and second TCE 42, 44, and lens 38, may be placed in different positions. In another embodiment, first TCE 42 is positioned between second TCE 44 and lens 38.

An "effect" as used herein represents a preset combination of camera parameters including, for example, a color filter, aperture setting, and shutter speed. Effects are preset, for example, for activities in which action cameras may be used, such as water sports, winter sports, and riding. In water sports, for example, different color filter and white balance settings may be used than in winter sports, due to differences in expected lighting conditions.

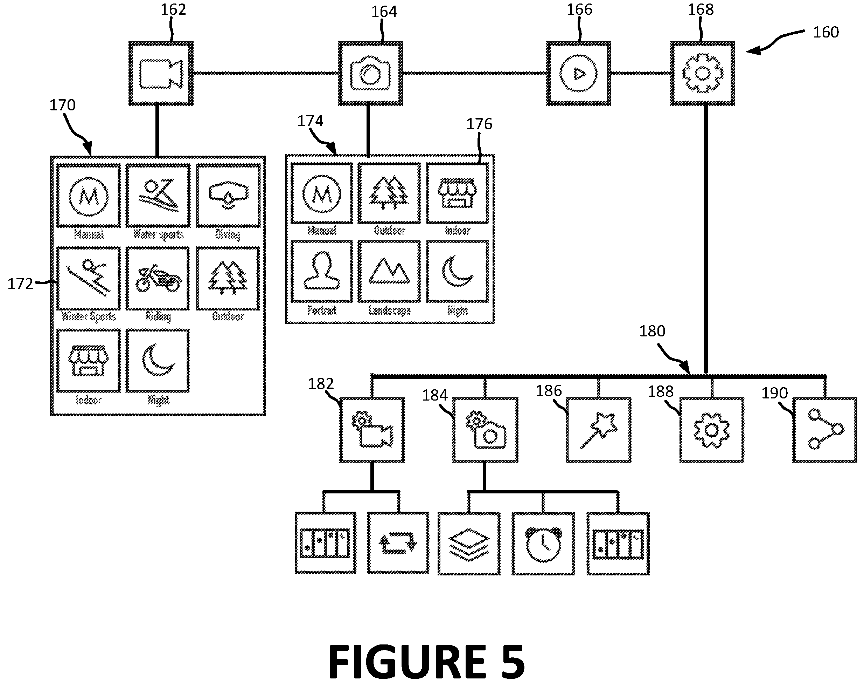

The menu navigation logic will now be described with reference to FIGS. 4 and 5. FIG. 4 illustrates screenshots of display screen 46 showing icons presented on a main display area 156 of display screen 46 depicting four mode icons of a mode menu 160. As shown therein, mode icon 162 corresponds to a video mode, mode icon 164 corresponds to a photo mode, mode icon 166 corresponds to a playback mode, and mode icon 168 corresponds to a settings mode. The present mode of camera 20 is indicated by presentation of a mode icon 158 on a top status bar of display screen 46. Additional icons are presented on a bottom status bar of display screen 46, indicating other settings of camera 20 including, for example, resolution, and field of view (FOV). Referring now to FIG. 5, and 140, 142 with reference to FIG. 3, the user may touch TCE 42 and TCE 44 in a second pattern to enter a video program or photo program mode. An example video program menu 170 is shown in FIG. 5 presenting a plurality of effect icons including a manual settings icon, a water sports icon, a diving icon, a winter sports icon 172, a riding icon, an outdoor icon, an indoor icon, and a night icon. Choosing one of these icons programs camera 20 to capture video using manual settings or settings preprogrammed for the particular activity and environment to achieve a desirable effect. The user may click first and second touch control elements 42, 44, as described with reference to FIG. 3, to select one of the effect icons in video program menu 170. Upon clicking first TCE 44, camera 20 will program the effect corresponding to the visually distinguished icon and thereafter camera 20 will operate by applying the selected effect. Similarly, a photo program menu 174 is shown in FIG. 5 including a plurality of photo effect icons including a manual settings icon, an outdoor icon, an indoor icon 176, portrait and landscape icons, and a night icon.

Selection of the playback mode enables the user to select and view photos or videos. Upon entering playback mode, camera 20 presents icons corresponding to stored content items and navigation icons to permit the user to select one of the items for playback. Upon selection of an item, camera 20 presents icons corresponding to different functions, which may include rewind, play, pause, delete, and fast forward. The navigation logic may enable navigation as described above, with one TCE operable to transition from one icon to the next, and the other TCE to select a function corresponding to a visually distinguishable icon. Camera 20 may also present an icon corresponding to an upload function, whereby the selected content item is transmitted to cloud storage via WiFi or cellular communications, described previously in connection with the quick streaming mode. Transmission of content is described in more detail below.

Selection of the settings mode enables the user to program camera settings using a settings menu 180 including a video settings icon 182, a photo settings icon 184, an effects settings icon 186, a general settings icon 188, and a communications icon 190. Selection of video settings icon 182 enables the user to choose settings for recording video applying the menu navigation logic. Video settings include mode (manual/auto), resolution, frames per second, field of view, video quality (fine, super fine, normal), and interval (predetermined intervals between events). Similarly, selecting photo settings icon 184 enables the user to choose settings that will be applied when recording photos. Photo settings include resolution, field of view, picture quality, and interval. Effects settings include filters, automatic exposure (AE), zoom, exposure value (EV), white balance, light sensitivity (ISO), upside down, and time stamps. General settings include beep, LED indicator, quick record, auto LCD off, auto power off, screen lock, TV out, time setup, and memory format. The user may hold second TCE 44 to exit the menu navigation logic.

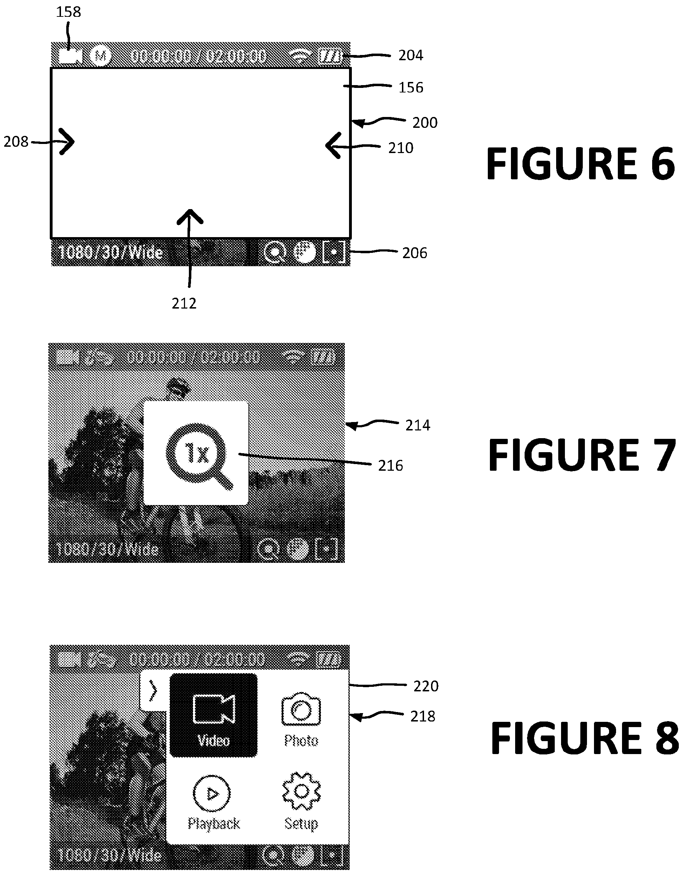

In a variation of the present embodiment, display screen 46 comprises a touch screen which provides the user with additional control options. FIGS. 6-11 will now be described to illustrate the utility of a touch screen and navigation logic. Of course, a touch screen cannot be used after camera 20 is placed inside protective housing 52 and protective housing 52 is closed and sealed. Therefore, the touch screen can advantageously be used to preselect settings before enclosing camera 20 in protective housing 52. Menus can be navigated with the touch screen by lateral/vertical swiping or by touching specific areas of display screen 20. The TCEs can be used as described below to navigate in a similar manner, except clicking and holding of the TCEs is substituted by touching and swiping the touch screen. In both cases the icons are displayed to navigate through the menus. FIG. 6 is a screenshot 200 of the touch screen. As shown, several icons are presented on the touch screen. When the user touches an area of the touch screen corresponding to the icon, navigation logic recognizes the contact area and camera 20 performs a corresponding function. In addition to main display area 156, screenshot 200 shows a top menu bar 204, a bottom menu bar 206, and navigation chevrons 208, 210 and 212. The user can touch the area corresponding to chevron 208 to cause camera 20 to present video program menu 170 (described with reference to FIGS. 5 and 10) or photo program menu 174 (described with reference to FIGS. 5 and 9), depending on whether camera 20 is operating in video or photo mode, or chevron 210 to cause camera 20 to present mode menu 160 (described with reference to FIGS. 5 and 8), or chevron 212 to cause camera 20 to present the quick menu (described with reference to FIG. 11). The user can also swipe the touch screen in the direction indicated by each of chevrons 208, 210 and 212 to perform the function associated with the particular chevron. As used herein, "swipe" and "swiping" refer to a sliding contact on the touch screen, the direction of which is detected by the navigation logic and associated with a user command, in the same manner that the navigation logic associates a user command with touching an area corresponding to a graphic presented on the touch screen.

In some embodiments, the user may also double-tap (or double-click) the touch screen to change the focal length of camera 20. FIG. 7 is a screenshot 214 of the touch screen illustrating a zoom icon 216. The user can double-tap once to call the zoom function, thus presenting zoom icon 216, and then tap, or click, successively over zoom icon 216 to choose 1X, 2X, 3X, or other focal lengths.

FIG. 8 is a screenshot 218 showing a mode menu tab 220 including mode icons corresponds to video mode, photo mode, playback mode, and settings mode, described previously with reference to FIG. 5 and mode menu 160. A chevron is provided to indicate that photo programming tab 220 may be closed by swiping left to right or by touching the touch screen over the chevron. By touching the touch screen over one of the mode menu icons the user can choose the corresponding mode. Of course, the user can also utilize the TCEs to navigate and select a mode, as described above.

FIG. 9 is a screenshot 222 showing a photo program tab 224 including a plurality of icons from photo program menu 174, including a visually distinguishable manual settings icon 226 and portrait effect icon 176. A chevron is provided to indicate that photo program tab 224 may be closed by swiping right to left or by touching the touch screen over the chevron. By touching the touch screen over one of the icons the user can program the camera with the corresponding effect.

FIG. 10 is a screenshot 228 showing a video program tab 230 including a plurality of icons from video program menu 170, including a visually distinguishable manual settings icon 232 and a winter sports icon 172. A chevron is provided to indicate that video programming tab 230 may be closed by swiping right to left or by touching the touch screen over the chevron. By touching the touch screen over one of the icons the user can program the camera with the corresponding effect.

FIG. 11 is a screenshot 234 showing a quick menu tab 236 including a plurality of quick menu icons including a visually distinguishable WiFi icon 238 and a beep icon 240 and additional icons corresponding to settings including upside-down (to record an image that is rotated 180 degrees relative to the top side of camera 20), quick record (to simultaneously turn the camera on and begin recording, as discussed with reference to FIG. 3), speaker (to set sound volume level), mic (to set microphone volume level), and a sliding bar to set the illumination level of display screen 46. A chevron is provided to indicate that quick menu tab 236 may be closed by swiping top to bottom or by touching the touch screen over the chevron. By touching the touch screen over one of the icons the user can program the camera with the corresponding effect.

As described previously, camera 20 can be programmed using first TCE 42 and second TCE 44 to provide substantial configuration control over camera 20 after it is enclosed in protective housing 52. This utility is advantageous in many situations. For example, a user may set the camera with a riding effect while riding on a boat toward a dive site, and then set the diving effect while submerged. The user may then, while in the water, select a different effect to obtain a unique video. For instance, the amount of light available to record video diminishes as a function of depth. Thus a different effect may be desired at different depths or while entering a coral passage, or while using lamps to illuminate different underwater structures. The user may also wish to set different light and FOV settings while underwater. Of course, as is sometimes the case, the user may determine after beginning an activity that the camera is not set in a desired manner and may then change the settings while performing the activity being recorded, through the protective housing. In fact the user may be able to push TCE 42 and TCE 44, which are advantageously placed on the top surface of the camera, opposite a bottom surface of the protective housing on which mounting member 70 is positioned, while camera 20 is supported by protective housing 52 to a transportation device or other equipment.

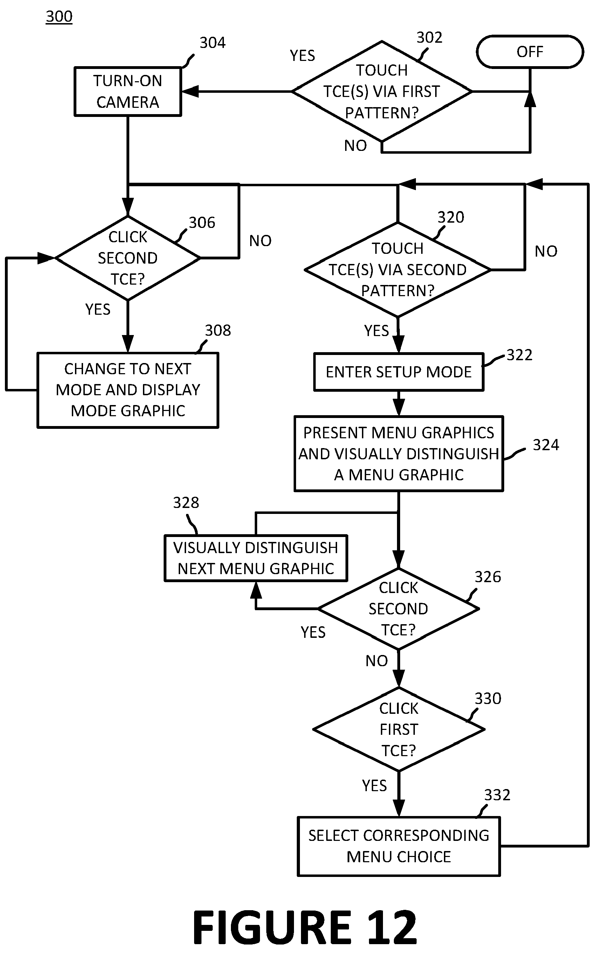

First and second TCE 42, 44 may be programmed with different navigation logic. An embodiment of the menu navigation logic was described above with reference to FIG. 3. Another embodiment will now be described with reference to FIG. 12, depicting a flow chart 300. Initially, camera 20 is turned off. Upon touching TCEs 42, 44 in a first pattern, at 302, camera 20 turns on, at 304. Once camera 20 is turned on, the user may click second TCE 44, at 306, and upon said clicking, camera 20 will present a mode icon on the main display area of display screen 46, at 308, and will set the corresponding operating mode of camera 20. In the present context, "the user may click second TCE 44" means that the user clicks only TEC 44. In other words, to present the mode icon the user clicks only TEC 44. Sequentially clicking second TCE 44 will cause camera 20 to cycle through the various modes of operation. In the present embodiment operating modes include video, photo, photo burst, and timelapse. In photo burst mode, camera 20 records multiple photos with a single click of first TCE 42. In timelapse mode, the camera captures multiple photos in set time intervals until stopped. As should be apparent based on the different modes described with reference to FIGS. 3 and 5, different operating modes can be programmed for selection with the mode menu. Returning to 304, the user may touch the touch control elements utilizing a second pattern different than the first pattern, at 320, to enter the setup mode, at 322. Camera 20 then presents setup menu icons, at 324, and visually distinguishes one of the setup menu icons. The menu navigation logic can then be used to navigate the setup menu, at 326, 328, 330, and 332, by cycling menu icons when clicking second TCE 44, and selecting a menu choice when clicking first TCE 42.

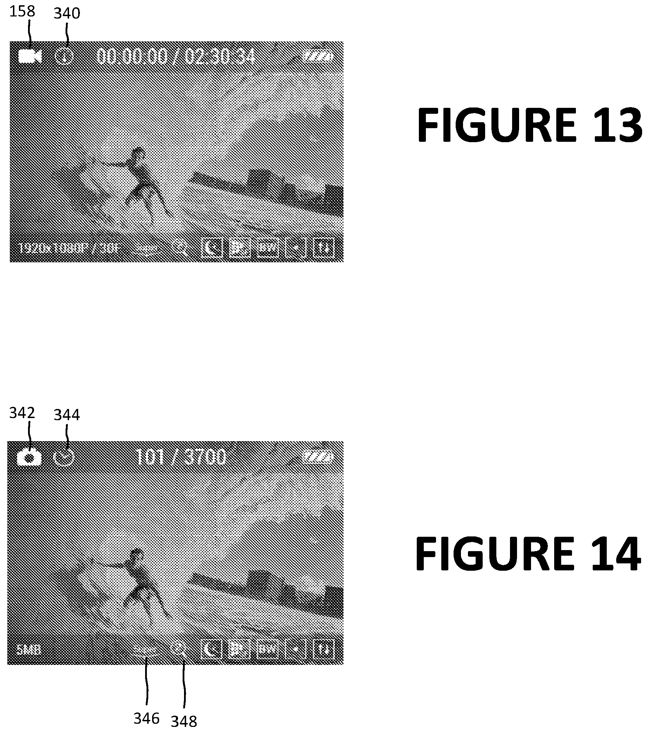

FIGS. 13 and 14 depict screenshots of display screen 46. FIG. 13 depicts a view showing mode icon 158 illustrating that camera 20 is in the video mode. A shooting mode icon 340 illustrates that camera 20 is programmed in a time lapse video recording mode. Other video recording modes include auto stop and looping. FIG. 14 depicts a view showing mode icon 342 illustrating that camera 20 is in the photo mode. A shooting mode icon 344 illustrates that camera 20 is programmed in a self-timer recording mode. Other photo recording modes include time-lapse and burst. An FOV icon 346 illustrates that camera 20 is programmed in a super-wide FOV. Other FOV settings include narrow, medium, and wide. In the super-wide FOV mode, a small portion of the pixel array is utilized to expand the angle of view of camera 20 to obtain a FOV greater than 160 degrees wide. The right and left edges of the image are then cropped to eliminate heavily distorted aspects, so that the resulting image represents a FOV of 160 degrees with minimal distortion near the right and left edges of the image. A zoom icon 348 illustrates that the camera is programmed for 2X zoom distance.

An embodiment of the internal components of camera 20 will now be described with reference to FIGS. 15 to 18. FIG. 15 is a block diagram 350 depicting components of camera 20 including an image sensor 352 comprising a pixel array 354, timing and control (T&C) logic 356, and digital signal processing (DSP) logic 358. Pixel array 354 receives light through lens 38 and, responsive to signals from T&C logic 356, transfers digital information corresponding to the light captured by each pixel of the array to DSP logic 358. DSP logic 358 applies effects to the digital information, which may include color filters, white balance, and others. Image sensor 352 then outputs digital images corresponding to photos or frames of a captured video to a camera controller 360 for further processing and subsequent storage in a memory card inserted in memory socket 54, presentation by display screen 46, and/or streaming or uploading by a wireless transceiver 382 and an antenna 384 to a smart device or cloud storage. Example image sensors include the IMX206CQC back-illuminated color CMOS integrated circuit marketed by Sony Corporation, Tokyo, Japan, and the OV4689 color CMOS integrated circuit marketed by OmniVision Technologies, Inc., Santa Clara, California, USA. Example smart devices include a smart phone, a computing tablet, and any device capable of communicating wirelessly and including a user interface with which a user may command transfers of content. As used herein, cloud storage comprises memory managed through a website. Cloud storage may comprise memory allocated to a user, for example via a subscription service, and may also comprise memory managed by social media websites to share the content with other users. Cloud storage typically comprises one or more content servers including a hard disk configured to store the content.

Camera controller 360 comprises a sensor controller 370 structured to provide control signals to image sensor 352 to configure image sensor 352 features such as filters, ISO, white balance, shutter speed and others. Camera controller 360 also comprises a media controller 380 structured to provide control signals to control operation of media including the media card in memory socket 54 and wireless transceiver 382, a video controller 390 configured to control display screen 46, general purpose I/O ports (GPIOS) 412 to control various input and output logic including first and second touch control element 42, 44, a central processing unit (CPU) 400, and navigation logic 406, which may be embedded in a memory 404. CPU 400 executes instructions embedded in camera controller 360 and also navigation logic 406 to operate the various controllers described hereinabove, and GPIOS 412. Example camera controllers include the SPCA 5330, 6330, and 6350 integrated circuits marketed by iCatch Technology, Inc., Hsinchu Science Park, Taiwan. Navigation logic 406 comprises logic instructions configured to implement the embodiments of the navigation method described with reference to FIGS. 3 and 12, and any variations and examples provided in connection with said embodiments.

Camera controller 360 is powered by a multi-channel DC/DC converter 420 comprising a plurality of DC outputs compatible with camera controller 360. DC/DC converter 420 is powered by a battery charger 422 which is supplied power from an external power source via USB port 58 or a battery 424. Battery charger 422 charges battery 424 with the external power or powers DC/DC converter 424 as needed. Example battery chargers include RT9519 and RT9536 integrated circuits marketed by Richtek Technology Corporation, Hsinch, Taiwan, R.O.C. An example DC/DC converter comprises an RT9992 integrated circuit marketed by Richtek Technology Corporation, Hsinch, Taiwan, R.O.C.

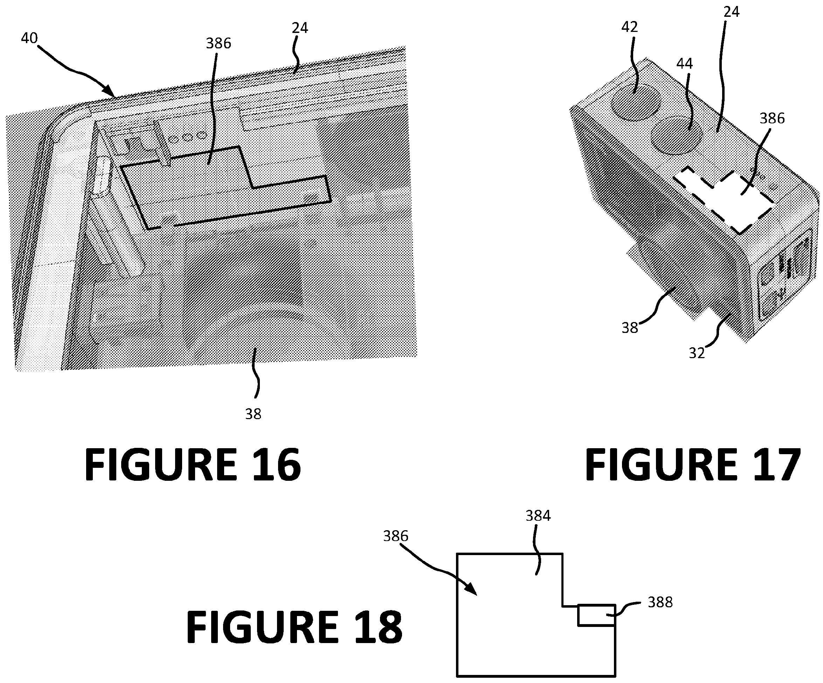

CPU 400 executes navigation logic 406 to monitor first TCE 42 and second TCE 44 to detect a touch and determines, based on the duration of the touch, whether it is a click or a hold. CPU 400 also determines if first TCE 42 and second TCE 44 were touched in the first or second predetermined patterns based on whether one or both of TCE 42, 44 were touched, and for how long. CPU 400 then causes display screen 46 to present various icons described above in connection with FIGS. 4-11. CPU 400 thus implements navigation logic 406 in accordance with the flowcharts described with reference to FIGS. 3 and 12. The content may also be transferred wirelessly by a wireless transceiver 382 to a smart device. The smart device may also be associated with camera 20 to enable the smart device to wirelessly control camera 20. CPU 400 may require input of validation credentials by the user onto the smart device before establishing a wireless association therewith. In one example, antenna 384 is comprised in a package 386, shown in FIG. 18, positioned adjacent and parallel to top wall 24 of camera 20 and also adjacent lens 38, as shown in FIGS. 16 and 17. Advantageously, positioning antenna 384 in such a position extends the transmission and reception range of antenna 384. CPU 400 also executes content management logic 410 in conjunction with navigation logic 406 to transfer the content to the internet, as disclosed below. Navigation logic 406 and content management logic 410 may referred to, collectively, as control logic. Navigation logic 406 may comprise tables associating click, hold, touch, and swipe events described above with various modes, effects, and functions, also described above. By selecting such modes, effects and functions, values in the tables are toggled or changed by navigation logic 406 to program the camera.

Wireless technology enables a smart device to connect in different modes with the camera. The user interface of the smart device may comprise a graphical user interface comprised in an application ("App") to enable the user to enter credentials to associate the smart device with the camera. An example credential includes a password. Association ensures that the camera connects to a permitted smart device and not to any smart device within wireless range. As used herein, streaming refers to the substantially real-time transfer of the content, e.g. without storing the content in the camera except as necessary in small portions and in a temporary manner (e.g. buffering) to facilitate smooth transmission of the content. Streaming may comprise transferring content at a preview resolution which is less than full resolution. Uploading, on the other hand, refers to the transfer of content after the content has been stored on the camera. Thus, transferring comprises both streaming and uploading content from the camera.

One wireless connection mode, referred to as "ad hoc", enables the camera and the smart device to connect wirelessly to each other in a peer-to-peer arrangement without an access point. Both devices have to be configured in ad hoc mode for the peer-to-peer arrangement to function. Another wireless connection mode, referred to as "infrastructure" or "client", enables the camera and the smart device to connect wirelessly to each other, or to the internet, through an access point. At least one of the camera and the smart device has to be configured as a client, or station, for the infrastructure arrangement to function. The other may be configured to operate in ad hoc or client modes. In the infrastructure mode, the camera establishes communications with the access point and may transfer content to the smart device or directly to cloud storage over the internet. Camera 20 may be configured to automatically change from one communication mode to another other, and wait a predetermined time to establish a connection, then switch to a different mode if a connection was not made. Camera 20 may be configured to establish a WiFi connection first, and if the connection attempt fails, to establish communication via a cellular network. Mode switching in this manner is well known in the art.

The access point, or wireless access point ("WAP"), is a networking hardware device that allows devices, e.g. camera and smart phone, to connect to a wired network. The WAP is typically connected to or is integrated with a router. In the infrastructure arrangement, the WAP and all wireless clients connected to it use the same service set identifier (SSID) and channel to communicate.

In some embodiments, the camera can be set to ad hoc or client mode by the user. In one embodiment, the camera is configured to stream content captured through the lens to the smart device. The App may include a graphical user interface configured to receive user instructions for remotely operating the camera, including changing camera settings, for example field of view and operating mode (photo/video), starting/stopping video recording, or capturing photos. Once associated, a user can begin recording video, for example, by providing a record command via the graphical user interface. The App transmits the record command to the camera, which begins capturing video and streaming the video to the App, where it is stored. The user may then utilize a social media link on the smart device to upload the content to social media, e.g. Facebook(TM), or a cloud storage link to a cloud storage service, e.g. Dropbox(TM), to store the content in the cloud storage.

In another embodiment, the camera connects wirelessly in the infrastructure mode with the access point. The camera may provide to the access point a user resource locator ("URL") address which the access point utilizes to establish a wired connection with the cloud storage. In one variation, the camera is configured to establish a wireless connection with the cloud storage and to transfer content to the cloud storage upon receiving a user command, for example via the playback mode described above. A website service related to the cloud storage may be configured to automatically transfer the content from the cloud storage to social media. In one example, the user provides the website service the credentials required to transfer content to social media, and thereafter any content transferred to the cloud storage by the camera is transferred to the selected social media by the website service automatically. This enables the user to manage where the content goes independent of the camera. The camera may be programed with the URL of the website service and the website service may be configured with camera credentials to permit transfers of content from the camera.

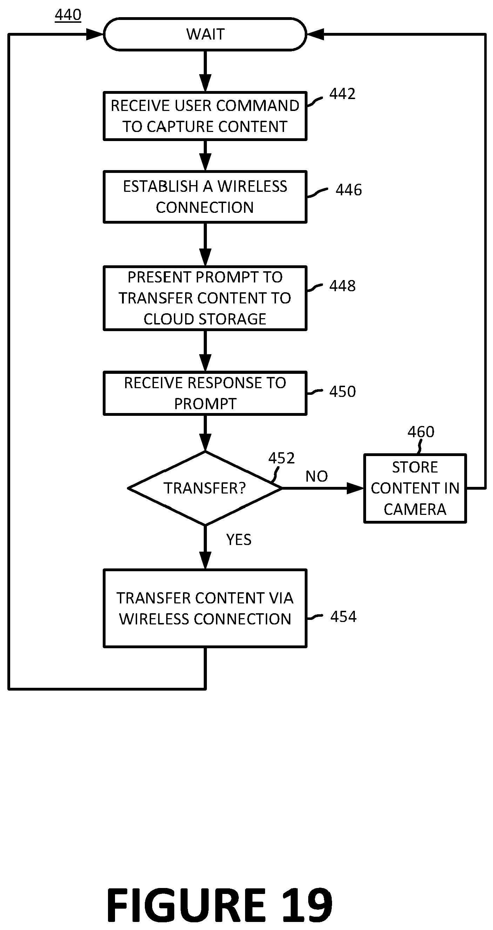

FIG. 19 is a flow chart 440 of an embodiment of a method of transferring content to the cloud storage. The method is implemented by content management logic 410 in camera 20 in conjunction with navigation logic 406 previously described and further modified as described below. The method includes, at 442, receiving a user command to capture content. The user command may comprise clicking first TCE 42 or may be a touch by the user on the touch screen responsive to presentation of a suitable icon on the touch screen. The user command may also be provided via the graphical user interface on a smart device associated with the camera.

The method further includes, at 446, establishing a wireless connection, at 448, presenting a prompt to the user requesting a command to transfer the content to the cloud storage, and at 450, receiving a response to the prompt. The prompt may comprise presentation of an upload icon during playback mode after the user selects a content item. The response may be the selection of the icon by the user. Alternatively, the camera may present icons upon receipt of the user command to capture content, for example icons representing upload, stream, or save. The user may select one of the three icons to select whether and how to transfer the content to be captured. Selection of the stream icon causes substantially real-time transfer of the content as it is captured, upload causes transfer after capture is complete, and save causes storage of the content on the camera without transfer.

At 452, the response is evaluated by the camera. If the response is a command to transfer content, at 454 content is transferred via the wireless connection. Otherwise, at 460, the content is stored in camera 20. Camera 20 may establish a wireless connection, at 446, at any time and not necessarily in the order described.

While various embodiments of the disclosure have been shown and described, it is understood that these embodiments are not limited thereto. The embodiments may be changed, modified and further applied by those skilled in the art. Therefore, these embodiments are not limited to the detail shown and described previously, but also include all such changes and modifications.

## Claims

1. A method of operating a camera configured to record video, the method comprising:
supporting the camera, the camera comprising a lens and a user interface including a display screen positioned opposite the lens and touch control elements consisting of a first touch control element and a second touch control element, and navigation logic structured to program the camera with the touch control elements;
touching in a first pattern at least one of the touch control elements to turn on the camera;
clicking, at least once, the second touch control element to enter an operating mode selected from a plurality of operating modes, wherein clicking comprises touching for less than a first predetermined time; and
touching the touch control elements according to a second pattern different than the first pattern and different from a single click of the second touch control element, to enter a program mode,
wherein touching comprises causing contact with at least one of the touch control elements until the navigation logic recognizes one of a touching and a holding.

2. A method as in claim 1, wherein holding comprises touching for at least a second predetermined time, the second predetermined time being longer than the first predetermined time, and/or
wherein touching according to a first pattern comprises holding the first touch control element, and wherein touching according to a second pattern comprises holding the second touch control element.

3. A method as in at least one of claims 1 to 2, wherein clicking, at least once, the second touch control element to enter an operating mode selected from a plurality of operating modes comprises clicking the second touch control element until a desired mode icon is presented on the display screen, wherein the operating mode is associated with the desired mode icon.

4. A method as in at least one of claims 1 to 3, further comprising, in the program mode, clicking the second touch control element until a desired effect icon is visually distinguished from other effect icons on the display screen; and clicking the first touch control element to program the camera with an effect associated with the desired effect icon.

5. A method as in at least one of claims 1 to 4, further comprising, in the program mode, clicking the second touch control element until a desired program icon is visually distinguished from other program icons on the display screen; clicking the first touch control element to select a program mode associated with the desired program icon; clicking the second touch control element until a desired effect icon is visually distinguished from other effect icons on the display screen, the effect icons corresponding to the selected program mode; and clicking the first touch control element to select an effect associated with the desired effect icon.

6. A camera configured to record video, the camera comprising:
a frame;
a lens supported by the frame;
an image sensor receiving light passing through the lens;
a user interface including a display screen positioned opposite the lens, touch control elements consisting of a first touch control element and a second touch control element, and navigation logic structured to:
turn on the camera responsive to touching in a first pattern at least one of the touch control elements,
switch to another operating mode from a present operating mode responsive to clicking, at least once, the second touch control element, wherein clicking comprises touching for less than a first predetermined time; and
enter a program mode responsive to touching the touch control elements according to a second pattern different than the first pattern and different from a single click of the second touch control element,
wherein touching comprises causing contact with at least one of the touch control elements until the navigation logic recognizes one of a touching and a holding.

7. A camera configured to record video, the camera comprising:
a frame;
a lens supported by the frame;
an image sensor receiving light passing through the lens;
a user interface consisting of a display screen positioned opposite the lens, a first touch control element, a second touch control element, and navigation logic structured to:
turn on the camera responsive to holding the first touch control element,
switch to another operating mode from a present operating mode responsive to clicking, at least once, the second touch control element,
enter a program mode responsive to holding the second touch control element, and
capture content responsive to touching the second touch control element,
wherein clicking comprises touching for less than a first predetermined time and holding comprises touching for at least a second predetermined time, the second predetermined time being longer than the first predetermined time.

8. A camera as in one of claims 6 or 7, wherein touching in a first pattern comprises holding, and holding comprises touching for at least a second predetermined time, the second predetermined time being longer than the first predetermined time.

9. A camera as in at least one of claims 6 to 8, wherein clicking, at least once, the second touch control element to enter an operating mode selected from a plurality of operating modes comprises clicking the second touch control element until a desired mode icon is presented on the display screen, wherein the operating mode is associated with the desired mode icon.

10. A camera as in at least one of claims 6 to 9, wherein clicking, at least once, the second touch control element comprises clicking the second touch control element once to cause the display screen to present a first mode icon, clicking the second touch control element at least a second time to present a mode icon corresponding to a desired mode, and clicking the first touch control element to enter the desired mode.

11. A camera as in at least one of claims 6 to 10, wherein the present operating mode and the desired operating mode are selected from a group including a photo mode and a video mode.

12. A camera as in at least one of claims 6 to 11, wherein the first touch control element comprises one of a capacitive sensor and a push-button.

13. A camera as in at least one of claims 6 to 12, wherein the first touch control element and the second touch control element are disposed between the lens and the display screen.

14. A camera as in at least one of claims 6 to 13, wherein the display screen comprises a touch sensor that is substantially coextensive with a display area of the display screen.

15. A camera as in at least one of claims 6 to 14, wherein the navigation logic comprises instructions configured to present navigation tabs on the display screen, the navigation tabs operable to enter the desired operating mode and the program mode responsive to touch of the touch sensor.

16. A camera as in at least one of claims 6 to 15, further comprising a flat package including a metal comprising an antenna pattern and a contact node, the antenna pattern configured to transmit radio-frequency signals provided at the contact node, the flat package affixed to and inside the frame parallel and adjacent to a top side of the frame.
